(19) Europäisches Patentamt
European Patent Office
Office européen des brevets

(11) EP 4 202 239 A1

(12) EUROPÄISCHE PATENTANMELDUNG

(43) Veröffentlichungstag:
28.06.2023 Patentblatt 2023/26

(21) Anmeldenummer: 21217088.0

(22) Anmeldetag: 22.12.2021

(51) Internationale Patentklassifikation (IPC):
F16B 37/06 (2006.01)   F16B 37/12 (2006.01)

(52) Gemeinsame Patentklassifikation (CPC):
F16B 37/065; F16B 37/122

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Böllhoff Verbindungstechnik GmbH
33649 Bielefeld (DE)

(72) Erfinder:
• DRAHT, Torsten
33758 Schloss Holte-Stukenbrock (DE)
• BRAND, Michael
33014 Bad Driburg (DE)
• MOEHRING, Jörg
33106 Paderborn (DE)
• MENNE, Franz Ferdinand
33175 Bad Lippspringe (DE)

(74) Vertreter: HWP Intellectual Property
Ridlerstraße 35
80339 München (DE)

Bemerkungen:
Geänderte Patentansprüche gemäss Regel 137(2)
EPÜ.

(54) **ADDITIV HERGESTELLTES BAUTEIL AUS METALL ODER KUNSTSTOFF MIT EINEM NORMGEWINDE**

(57)    Ein Bauteilverbund (A) bestehend aus einem additiv hergestellten Bauteil (10) aus Metall oder Kunststoff, welches einen zumindest einseitig an einer Bauteilöffnung (11) offenen inneren Aufnahmeraum (12) aufweist, der von einer Bauteilseite zugänglich und in einem axialen Querschnitt pilzförmig ausgebildet ist, wobei der Aufnahmeraum zumindest einen der Bauteilöffnung zu-gewandten aufgeweiteten Einformabschnitt (14) und zu-mindest einen der Bauteilöffnung abgewandten zylinder-förmigen Stützabschnitt (16) aufweist, wobei eine Blind-nietmutter (20) oder ein Blindnietbolzen (22) in dem Auf-nahmeraum befestigt sind, indem sich eine Stauchwulst (27) der Blindnietmutter oder des Blindnietbolzens in den aufgeweiteten Einformabschnitt (14) erstreckt.

Fig. 2

**Beschreibung**

1. Gebiet der Erfindung

Die vorliegende Erfindung betrifft ein additiv hergestelltes Bauteil aus Metall oder Kunststoff, welches daran angepasst ist, eine Blindnietmutter oder ein ähnliches Gewindeelement zur Bereitstellung eines lehrenhaltigen Gewindes, insbesondere ein Normgewinde, aufzunehmen. Des Weiteren betrifft vorliegende Erfindung einen Bauteilverbund bestehend aus dem additiv hergestellten Bauteil und einer Blindnietmutter oder einem Blindnietbolzen oder einer Gewindehülse zur Bereitstellung eines lehrenhaltigen Gewindes, insbesondere ein Normgewinde, in dem additiv hergestellten Bauteil. Zudem betrifft vorliegende Erfindung ein additives Herstellungsverfahren eines Bauteils, welches eines der oben genannten Gewindeelemente aufnehmen kann, sowie ein Herstellungsverfahren eines additiv gefertigten Bauteils mit einem lehrenhaltigen Gewinde, insbesondere ein Normgewinde, in dem eines der oben genannten Gewindeelemente fest in dem additiv hergestellten Bauteil angeordnet wird.

2. Hintergrund der Erfindung

Additiv gefertigte Bauteile aus Kunststoff oder Metall werden aufgrund der zunehmenden Designfreiheit in der Praxis immer attraktiver. Ein Nachteil dieser Bauteile besteht jedoch in direkt additiv gefertigten Gewinden. Derartige Gewinde müssen in der Regel nachgearbeitet werden, um in dem jeweiligen Bauteil ein normgerechtes Gewinde, also ein Gewinde entsprechend bekannter Standards, wie DIN-Normen und dergleichen, welches lehrenhaltig ist, bereitstellen zu können. Denn aufgrund der prozessbedingten Fertigungstoleranzen bei der additiven Herstellung von Bauteilen sind bisher normgerechte Gewinde nicht realisierbar.

Eine weitere Option bestünde darin, durch zerspanende Bearbeitungsschritte Gewinde in einem additiv hergestellten Bauteil nachträglich zu erzeugen. Handelt es sich bei dem Werkstoff des additiv hergestellten Bauteils jedoch um schwer zerspanbare Werkstoffe, wie beispielsweise Nickelbasislegierungen oder Titan, ist das Einbringen von Gewinden oft mit einem erheblichen Zusatzaufwand verbunden.

Werden Bauteile direkt gefertigt, also ohne die Nutzung von additiven Verfahren, gibt es zusätzliche Vorbehalte von empfindlichen Branchen, wie beispielsweise der Medizin-, Luftfahrt- und Raumfahrttechnik. Denn bei der konventionellen Gewindefertigung in Bauteilen werden Kühl-und Schmierstoffe eingesetzt, die nur mit hohem apparativen und Zeitaufwand von den hergestellten Bauteilen abgereinigt werden können. Das gleiche gilt für die vorliegenden Späne, sofern zerspanende Verfahren bei der Gewindeherstellung eingesetzt worden sind.

Daher ist auch für diese empfindlichen Branchen die Herstellung von additiven Bauteilen mit Gewinde von zunehmender Bedeutung.

In der europäischen Patentanmeldung EP 3 434 916 A1 wird die additive Herstellung eines Bauteils mit einer Haltevorrichtung für ein Gewindeelement beschrieben. Diese Haltevorrichtung hat beispielsweise die Form einer Kralle, welche in dem additiv hergestellten Bauteil verankert ist. In dieser Kralle lässt sich ein Gewindeelement unterschiedlicher Dimension lösbar befestigen, um das additiv hergestellte Bauteil mit einem Gewinde bereitzustellen. Diese Art der Konstruktion hat jedoch den Nachteil, dass zunächst ein Hilfsbauteil, hier die oben genannte Kralle, in dem additiv hergestellten Bauteil verankert werden muss. Erst danach ist es möglich, das erforderliche Gewindeelement mit dem Bauteil zu verbinden. Diese Vielzahl an Konstruktionsschritten sowie die Lösbarkeit des Gewindeelements vom additiv hergestellten Bauteil bringen verschiedene Probleme in der Praxis mit sich.

Die chinesische Patentanmeldung CN 101 530 919 A beschreibt die Herstellung eines additiv hergestellten Bauteils aus Metallpulver und einem Binder. Zur Bereitstellung eines Innengewindes in dem Bauteil wird eine Gewindehülse in die Binderlösung eingegossen, sodass ein Grünkörper mit Gewindehülse entsteht. Nachfolgend wird der Binder aus dem Grünkörper ausgebrannt und das Metallpulver ausgehärtet, um ein fertiges Bauteil mit Gewindehülse bereitzustellen. Dieses Herstellungsverfahren hat den Nachteil, dass die Vernetzung bzw. Befestigung der Gewindehülse in dem auszubrennenden Grünkörper während der Grünkörperfertigung sowie während der späteren Bauteilfertigung sichergestellt werden muss. Die dafür erforderlichen strukturellen und chemischen Voraussetzungen sind nicht trivial, um tatsächlich eine ausreichende Auszugsfestigkeit der Gewindehülse aus dem hergestellten additiven Bauteil sicherstellen zu können.

In der europäischen Patentanmeldung EP 3 584 454 A2 wird in einem additiven Herstellungsverfahren ein Haltering mit einem darin angeordneten beweglichen Mutternelement hergestellt. Der Vorteil dieser Anordnung besteht darin, dass das Mutternelement in einer umfänglich umlaufenden Haltenut des Rings in seiner Winkelorientierung geändert werden kann, um eine Verbindung mit einem Gewindebolzen in unterschiedlichen Orientierungen herstellen zu können. In Bezug auf die additive Herstellung des Mutternelements bleibt jedoch offen, welche Qualität das Innengewinde des Mutternelements aufweist. Da auch in diesem additiven Herstellungsverfahren die gleichen Toleranzen bei der Herstellung eines Gewindes gelten, ist anzunehmen, dass das offenbarte Gewinde durch passende Nacharbeitungsschritte überarbeitet werden muss, um eine passende Verbindung zu einem Gewindebolzen mit einem Standardgewinde herstellen zu können. Daher liefert auch dieses Dokument keine verlässliche Möglichkeit, um ein additiv hergestelltes Bauteil mit einem Gewindeelement auszustatten.

Es ist daher die Aufgabe vorliegender Erfindung, ein additiv hergestelltes Bauteil mit einem normgerechten Gewinde bereitzustellen, um das Bauteil verlässlich verbinden zu können.

3. Zusammenfassung der Erfindung

Die obige Aufgabe wird gelöst durch ein additiv hergestelltes Bauteil aus Metall oder Kunststoff gemäß dem unabhängigen Patentanspruch 1, durch einen Bauteilverbund aus einem additiv hergestellten Bauteil und einem Gewindeelement gemäß den unabhängigen Patentansprüchen 10, 11 und 13, durch ein additives Herstellungsverfahren für ein Bauteil gemäß dem unabhängigen Patentanspruch 15 sowie durch ein Herstellungsverfahren für ein additives Bauteil mit einem Normgewinde gemäß dem unabhängigen Patentanspruch 16. Vorteilhafte Ausführungsformen und Weiterentwicklungen vorliegender Erfindung ergeben sich aus der nachfolgenden Beschreibung, den begleitenden Zeichnungen sowie den anhängenden Patentansprüchen.

Vorliegende Erfindung ist ein additiv hergestelltes Bauteil aus Metall oder Kunststoff, welches einen zumindest einseitig an einer Bauteilöffnung offenen inneren Aufnahmeraum aufweist, der von einer Bauteilseite zugänglich und in einem axialen Querschnitt pilzförmig ausgebildet ist, wobei der Aufnahmeraum zumindest einen der Bauteilöffnung zugewandten aufgeweiteten Einformabschnitt und zumindest einen der Bauteilöffnung abgewandten zylinderförmigen Stützabschnitt aufweist, insbesondere einen radial aufgeweiteten Einformabschnitt in Bezug auf den zylinderförmigen Stützabschnitt.

Vorliegende Erfindung liefert ein additiv hergestelltes Bauteil, welches mit einem lehrenhaltigen, belastbaren Gewinde, vorzugsweise mit einem Normgewinde, ausgestattet ist. Um dieses Ziel zu erreichen und damit eine Lösung für obige Aufgabe bereitzustellen, offenbart vorliegende Erfindung ein Hybridbauteil bestehend aus einem mit Hilfe eines additiven Herstellungsverfahrens hergestellten Bauteils, in welchem eine bekannte Blindnietmutter, ein Blindniebolzen, eine Gewindehülse oder ein ähnliches, bekanntes Element mit einem lehrenhaltigen Gewinde angeordnet wird. Voraussetzung für einen derartigen Bauteilverbund, wie er unten näher beschrieben wird, ist zunächst ein additiv hergestelltes Bauteil, welches aus Kunststoff oder aus Metall besteht.

Additive Herstellungsverfahren sind im Stand der Technik allgemein bekannt. Demgemäß werden mithilfe von Kunststoffgranulat schichtweise Bauteile aufgebaut, mit denen komplexere Konstruktionen als beispielsweise mithilfe von Spritzguss oder spanenden Verfahren realisierbar sind. In gleicher Weise ist es ebenfalls möglich, Metallpulver in einem additiven Herstellungsverfahren zu einem Bauteil zu verarbeiten. Voraussetzung für derartige bekannte additive Herstellungsverfahren ist eine dreidimensionale Bauteilkonstruktion, die computergestützt in ein Schichtmodell umgewandelt wird. Nachfolgend wird dann mithilfe des Schichtmodells das tatsächliche Bauteil schichtweise aufgebaut.

Um das erfindungsgemäße additive Bauteil mit einem lehrenhaltigen Gewindeelement ausstatten zu können, ist in dem additiv hergestellten Bauteil ein im axialen Querschnitt pilzförmiger Aufnahmeraum vorgesehen. Dieser Aufnahmeraum ist über eine Bauteilöffnung in der Bauteiloberfläche des Bauteils zugänglich. Entsprechend ist es möglich, über die Bauteilöffnung das lehrenhaltige Gewindeelement in die pilzförmige Bauteilöffnung einzusetzen. Der pilzförmige Querschnitt ergibt sich aus der Kombination eines aufgeweiteten Einformabschnitts, welcher der Bauteilöffnung zugewandt ist. An diesen aufgeweiteten Einformabschnitt schließt sich ein zylindrischer Aufnahme- oder Stützabschnitt an. Somit ist bevorzugt der Einformabschnitt in radialer Richtung bezogen auf eine Mittellängachse des Bauteils und zudem im Vergleich zu einer radialen Ausdehnung des Stützabschnitts aufgeweitet. Die Zielstellung dieser beiden Abschnitte lässt sich an der beispielgebenden Aufnahme einer Blindnietmutter erläutern. Denn eine Blindnietmutter stellt ihr Innengewinde in einem zylindrischen Abschnitt bereit, der zumindest teilweise durch den zylindrischen Stützabschnitt des additiv hergestellten Bauteils aufgenommen wird.

Um die Blindnietmutter in bekannter Weise an einem Blechbauteil zu befestigen, erfolgt eine axiale Stauchung der Blindnietmutter. Diese resultiert in eine radiale Stauchwulst oder in eine sich radial nach außen erstreckende Faltung eines Schaftbereichs, die sich bevorzugt radial über die Außenseite des zylindrischen Stützabschnitts hinaus erstreckt.

Um eine Blindnietmutter in dem additiv hergestellten Bauteil befestigen zu können, ist der aufgeweitete Einformabschnitt vorgesehen. Denn während der stauchenden Befestigung der Blindnietmutter oder des Blindnietbolzens oder einer Gewindehülse mit Stauchabschnitt verformt sich die Stauchwulst oder Faltung in den Einformabschnitt des additiven Bauteils und wird darin aufgenommen. Somit stellt das additiv hergestellte Bauteil einen pilzförmigen Aufnahmeraum zur Positionierung, Befestigung und Kopplung zwischen dem additiv hergestellten Bauteil und dem Gewindeelement bereit.

Um den Aufnahmeraum für die Stauchwulst oder Faltung bereitzustellen, ist die Formgestaltung des Einformabschnitts frei gestaltbar, so lange sich der Einformbereich radial über den Stützabschnitt hinaus erstreckt. Gemäß unterschiedlicher bevorzugter Ausführungsformen vorliegender Erfindung ist der aufgeweitete Einformbereich wulstartig oder torusartig oder polyederartig oder ellipsoidal oder drei-, vier- oder fünfeckig oder zylindrisch oder kegelstumpfartig ausgebildet, um das erforderliche Aufnahmevolumen für den Stauchbereich des Gewindeelements aufnehmen zu können.

Denn der aufgeweitete Einformabschnitt stellt nicht nur den nötigen Verformungsraum für die beispielgebend genutzte Blindnietmutter oder den Blindnietbolzen bereit. Vielmehr dient der aufgeweitete Einformabschnitt vorzugsweise auch zur Herstellung eines Formschlusses zwischen dem additiv hergestellten Bauteil und dem stauchend verformten Gewindeelement. Zudem ist es bevorzugt, dass die Verbindung zwischen stauchend verformtem Gewindeelement und dem additiv hergestellten Bauteil in einen Presssitz resultiert, der bevorzugt eine Positionssicherung des Gewindeelements im additiv hergestellten Bauteil gewährleistet. Eine derartige Positionssicherung hat den Vorteil, dass vorzugsweise das Gewindeelement gegen Rotation um seine Längsachse festgehalten wird. Eine weitere Zielstellung besteht darin, eine axiale Position des Gewindeelements innerhalb des Bauteils zu gewährleisten. Das bedeutet, dass das Gewindeelement in Richtung seiner Längsachse nicht versetzt werden kann.

Erfindungsgemäß bevorzugt ist ein Durchmesser des Einformabschnitts des additiv hergestellten Bauteils größer als ein Durchmesser des Stützabschnitts.

Wie aus der Verwendung von gestauchten Gewindeelementen, wie beispielsweise einer Blindnietmutter oder eines Blindnietbolzens, bekannt ist, erstreckt sich in radialer Richtung die gebildete Stauchwulst über eine radiale Außenseite eines Gewindeabschnitts hinaus. Angepasst an diese Form wurde gemäß einer bevorzugten Ausgestaltung vorliegender Erfindung der aufgeweitete Einformabschnitt in seinem Durchmesser größer gestaltet als der Durchmesser des Stützabschnitts. Dies stellt den erforderlichen inneren Hohlraum zur Verfügung, in welchem das gesetzte, gestauchte Gewindeelement aufgenommen werden soll. Neben dem nötigen Raum zur Aufnahme der Stauchwulst des zu stauchenden Gewindeelements dient der in radialer Richtung größer ausgebildete aufgeweitete Einformabschnitt im Vergleich zu dem Stützabschnitt auch der Unterstützung eines sich ausbildenden Hinterschnitts zwischen additiv hergestelltem Bauteil und gestauchtem Gewindeelement. Denn durch das Einformen der Stauchwulst in den aufgeweiteten Einformabschnitt bildet die Stauchwulst des Gewindeelements in Kombination mit dem aufgeweiteten Einformabschnitt einen Hinterschnitt in axialer Richtung des Gewindeelements. Dies unterstützt eine Auszugsfestigkeit und eine axiale Positionierung des Gewindeelements in Ergänzung zur mechanischen Befestigung des zu stauchenden Gewindeelements in dem additiv hergestellten Bauteil.

Gemäß einer weiteren bevorzugten Ausgestaltung vorliegender Erfindung weist der Stützabschnitt des additiv hergestellten Bauteils eine umlaufende Innenwand auf, die umfänglich durch eine Durchmesservariation des Stützabschnitts, vorzugsweise rotationshemmend, strukturiert ist.

Gemäß einer anderen bevorzugten Ausgestaltung vorliegender Erfindung weist der Einformabschnitt des additiv hergestellten Bauteils eine umlaufende Innenwand auf, die umfänglich durch eine Durchmesservariation des Einformabschnitts strukturiert ist.

Um zusätzlich zu einem bevorzugten Presssitz des gestauchten Gewindeelements in dem additiv hergestellten Bauteil einen rotationshemmenden Formschluss zwischen Bauteil und Gewindeelement zu erzielen, wird die radial innere umlaufende Innenwand des zylindrischen Stützabschnitts und/oder des Einformabschnitts strukturiert ausgebildet. Struktur bedeutet in diesem Zusammenhang, dass ein Innendurchmesser des Einformabschnitts und/oder des Stützabschnitts derart in seiner Größe mit einer Drehung um 360° innerhalb des jeweiligen Abschnitts variiert, dass sich bei einer passenden Einformung eines Abschnitts der Außenseite des gestauchten Gewindeelements ein Formschluss zwischen dem additiv hergestellten Bauteil und dem Gewindeelement ergibt. Dieser Formschluss hat zur Folge, dass das Gewindeelement bevorzugt gegen eine Drehung um seine Längsachse mithilfe dieses Formschlusses im additiv hergestellten Bauteil festgehalten wird. Ein derart bevorzugter Formschluss wird beispielsweise durch Radialstufen, winklige oder stegartige Vorsprünge an der radialen Innenseite des Einformabschnitts oder des Stützabschnitts, durch vorspringende Blockierstege oder Blockiernoppen oder dergleichen erzielt.

Erfindungsgemäß bevorzugt verhält sich ein Durchmesser $D_1$ des Einformabschnitts zu einem Durchmesser $D_2$ des Stützabschnitts gemäß $0{,}6 \leq D_2/D_1 \leq 0{,}95$.

Zur bevorzugten Anpassung des pilzförmigen Aufnahmeraums an das aufzunehmende zu stauchende Gewindeelement ist es weiterhin bevorzugt, den Einformabschnitt mit einem größeren Durchmesser im Vergleich zum zylindrischen Stützabschnitt auszustatten. Die in diesem Zusammenhang bevorzugten Verhältnisse zwischen den Durchmessern von Einformabschnitt und Stützabschnitt sorgen für einen ausreichenden Hinterschnitt in axialer Richtung, welcher die bevorzugte Auszugsfestigkeit des gestauchten Gewindeelements aus dem additiv hergestellten Bauteil gewährleistet.

Gemäß einer weiteren bevorzugten Ausführungsform des additiv hergestellten Bauteils weist der Einformabschnitt eine axiale Ausdehnung $h_E$ in einem Bereich von $0{,}5$ mm $\leq h_E \leq 10$ mm, insbesondere $0{,}5$ mm $\leq h_E \leq 5$ mm, auf.

Gemäß einer weiteren bevorzugten Ausgestaltung des erfindungsgemäßen additiv gefertigten Bauteils mit Aufnahmeraum für das zu stauchende Gewindeelement ist der aufgeweitete Einformabschnitt in seiner axialen Ausdehnung auf einen bevorzugten Bereich begrenzt. Dieser bevorzugte axiale Bereich gewährleistet eine möglichst enge Einpassung der Stauchwulst des gestauchten Gewindeelements in den aufgeweiteten Einformabschnitt. Auf diese Weise wird vorzugsweise ein axiales Spiel zwischen der Stauchwulst des Gewindeelements und der axialen Ausdehnung des Einformabschnitts in axialer Richtung des Gewindeelements auf ein Minimum begrenzt. Dies hat den bevorzugten Vorteil, dass sich während des stauchenden Einformens des Gewindeelements, wie beispielsweise der Blindnietmutter, mehrere berührende Grenzflächen zwischen dem Gewindeelement und dem additiv hergestellten Bauteil ausbilden. Diese vorzugsweise aneinander anliegenden Grenzflächen unterstützen eine Übertragung mechanischer Lasten zwischen dem Gewindeelement und dem Bauteil, wodurch die mechanische Einzelbelastung der beiden Bestandteile des Bauteilverbunds reduziert wird.

Gemäß einer weiteren bevorzugten Ausgestaltung vorliegender Erfindung ist zwischen der Bauteilöffnung und dem Einformabschnitt ein radial einwärts ragender umlaufender Kragen angeordnet, der als axialer Klemmbereich mit einer axialen Stärke $h_K$ in einem Bereich von 0,5 mm $\leq h_K \leq$ 5 mm dient.

Gemäß unterschiedlichen bevorzugten Ausgestaltungen von zu stauchenden Gewindeelementen, wie beispielsweise einer Blindnietmutter oder eines Blindnietbolzens, weisen diese einen umlaufenden Kragen auf. Dieser Kragen dient dazu, dass sich das zu stauchende Gewindeelement nach dem Einsetzen in eine Bauteilöffnung an der Bauteiloberfläche abstützt. Dies hat den Vorteil, dass eine definierte axiale Position des zu stauchenden Gewindeelements innerhalb des additiv hergestellten Bauteils erzielt werden kann. Zudem hat dieser Kragen den Vorteil, dass er eine Anlagefläche bereitstellt, sodass ergänzend zu dem durch die Stauchwulst gebildeten Hinterschnitt auch der Kragen einen axialen Hinterschnitt bildet. Weiterhin bevorzugt ermöglicht dieser Kragen eine Blockverschraubung über den Kragen gegen das Gewindeelement, um das additiv hergestellte Bauteil mechanisch zu entrasten.

Um diese Positionierung und das Halten des zu stauchenden Gewindeelements innerhalb des additiv hergestellten Bauteils zu unterstützen, wird ein radial einwärts ragender umlaufender Kragen angrenzend an den Aufnahmeraum des additiv hergestellt Bauteils bereitgestellt. Dieser radial einwärts ragende Kragen stellt vorzugsweise zwei einander gegenüberliegende Anlageflächen für die Stauchwulst und den Radialkragen des gestauchten Gewindeelements bereit. Mithilfe einer bevorzugten axialen Dicke des radial einwärts ragenden Kragens wird sichergestellt, dass ein bevorzugter Presssitz zwischen dem gestauchten Gewindeelement und dem Bauteil erzielt wird. Denn gemäß einer bevorzugten Ausgestaltung vorliegender Erfindung wird durch das Stauchen des Gewindeelements der radial einwärts ragende Kragen des additiv hergestellten Bauteils zwischen der Stauchwulst und dem Kragen des Gewindeelements in einer Presspassung reibschlüssig gehalten.

Vorliegende Erfindung umfasst zudem die bevorzugte Ausführungsform, in der zwischen der Bauteiloberfläche und dem Einformabschnitt eine Axialstufe angeordnet ist, die bevorzugt eine unrunde Radialkontur aufweist.

Gemäß einer bevorzugten Anpassung des additiv hergestellten Bauteils an die Aufnahme einer Gewindehülse mit axial einseitig ausgebildetem Stauchbereich ist eine Axialstufe an dem additiv hergestellten Bauteil vorgesehen. Diese Axialstufe umgibt bevorzugt die Bauteilöffnung, welche in den Aufnahmeraum des additiv hergestellten Bauteils führt. Zudem stellt die bevorzugte Axialstufe eine axiale Vertiefung in der Bauteiloberfläche angrenzend an die Bauteilöffnung dar.

In dieser Vertiefung ist vorzugsweise ein umlaufender Kragen beispielsweise einer aufzunehmenden Gewindehülse aufnehmbar. Gemäß einer bevorzugten Ausgestaltung sorgt die Axialstufe dafür, dass die Gewindehülse fluchtend in dem additiv hergestellten Bauteil aufgenommen ist. Somit steht kein axialer Abschnitt der Gewindehülse an der Bauteiloberfläche des additiv hergestellten Bauteils vor.

Gemäß einer weiteren bevorzugten Ausgestaltung wird die Axialstufe zur Herstellung eines Formschlusses zwischen einem Kragen der Gewindehülse und einer radialen Innenseite der Axialstufe verwendet. Denn beim bevorzugten Einformen der Gewindehülse in die Axialstufe, genauer gesagt des Radialkragens der Gewindehülse in die Axialstufe, wird bevorzugt eine unrunde Umfangskontur des Radialkragens des Gewindeelements in eine unrunde Innenumfangskontur der Axialstufe eingeformt. Entsprechend bildet sich ein bevorzugter Formschluss zwischen dem Gewindeelement und dem additiv hergestellten Bauteil heraus. Dieser dient vorzugsweise der mechanischen Lasteinleitung aus dem Gewindeelement in das additiv hergestellte Bauteil, wenn beispielsweise ein Gewindebolzen in die Gewindehülse eingeschraubt wird.

Weiter bevorzugt ist in dem zylinderförmigen Stützabschnitt des additiv hergestellten Bauteils ein Innengewinde vorgesehen.

Gemäß einer bevorzugten Ausgestaltung vorliegender Erfindung weist die in dem additiv hergestellten Bauteil aufzunehmende Gewindehülse neben dem Innengewinde auch ein Außengewinde auf. Dieses Außengewinde wird vorzugsweise in ein Innengewinde des zylinderförmigen Stützabschnitts eingeschraubt. Des Weiteren ist es ebenfalls bevorzugt, den zylindrischen Stützabschnitt ohne ein Innengewinde vorzusehen. Denn in beiden Fällen wird vorzugsweise der axial endseitig ausgebildete Stauchabschnitt der Gewindehülse bevorzugt in den aufgeweiteten Einformabschnitt verformt, um die Gewindehülse in dem additiv hergestellten Bauteil zu befestigen.

Vorliegende Erfindung umfasst zudem einen Bauteilverbund bestehend aus einem additiv hergestellten Bauteil gemäß einer der obigen Ausgestaltungen und einer Blindnietmutter oder einem Blindnietbolzen, die jeweils in dem Aufnahmeraum befestigt sind, wobei sich eine Stauchwulst der Blindnietmutter oder des Blindnietbolzens in den aufgeweiteten Einformabschnitt erstreckt.

Vorliegende Erfindung umfasst weiterhin einen Bauteilverbund bestehend aus einem additiv hergestellten Bauteil gemäß einer der obigen Ausgestaltungen und einer Gewindehülse mit einem radial äußeren Befestigungsgewinde und einem radial inneren Normgewinde, die in dem Aufnahmeraum befestigt ist, wobei sich eine Stauchwulst der Gewindehülse in den aufgeweiteten Einformabschnitt erstreckt. Vorzugsweise ist ein Endkragen der Gewindehülse in der Axialstufe des Bauteils angeordnet und bildet eine formschlüssige Verbindung mit dem Bauteil aus.

Gemäß unterschiedlichen Formen vorliegender Erfindung wird ein Bauteilverbund bestehend aus einem additiv hergestellten Bauteil und einem stauchend befestigten Gewindeelement mit einem lehrenhaltigen Gewinde, vorzugsweise einem Normgewinde, bereitgestellt. Das stauchend zu befestigende Gewindeelement wird zu diesem Zweck in dem in seinem axialen Querschnitt pilzförmig ausgebildeten Aufnahmeraum angeordnet und dort durch eine axiale Stauchung mit Stauchwulstbildung befestigt. Zu diesen Gewindeelementen mit einem lehrenhaltigen Innengewinde zählen eine Blindnietmutter und eine Gewindehülse. Zudem ist es bevorzugt, einen Blindnietbolzen in dem additiv hergestellten Bauteil zu befestigen, sodass sich der Bauteilverbund bestehend aus dem additiv hergestellten Bauteil und dem Blindnietbolzen ergibt.

Vorliegende Erfindung umfasst außerdem einen Bauteilverbund bestehend aus einem additiv hergestellten Bauteil aus Metall oder Kunststoff, welches einen zumindest einseitig an einer Bauteilöffnung offenen inneren Aufnahmeraum aufweist, der von einer Bauteilseite zugänglich und in einem axialen Querschnitt zylinderförmig ausgebildet ist. Der Aufnahmeraum weist an einer der Bauteilöffnung abgewandten Seite einen Aufspreizkegel auf, der sich in Richtung Bauteilöffnung verjüngt und von einem umlaufenden Einformspalt umgeben ist. In der zylinderförmigen Bauteilöffnung ist eine Gewindehülse mit einseitigem Nietfuß verankert, indem der Nietfuß in den umlaufenden Einformspalt radial aufgespreizt ist.

Vorzugsweise hat die Gewindehülse ein inneres Normgewinde und der Nietfuß ist als Spreizfuß ausgebildet.

Des Weiteren offenbart vorliegende Erfindung einen Bauteilverbund bestehend aus dem additiv hergestellten Bauteil und einer Gewindehülse mit befestigendem Spreizfuß. Dieser Spreizfuß wird in einen Einformspalt gedrängt, der einen Aufspreizkegel innerhalb des additiv hergestellten Bauteils umgibt. Auf diese Weise entsteht eine reibschlüssige und formschlüssige Verbindung zwischen der Gewindehülse mit Spreizfuß und dem additiv hergestellten Bauteil. Zudem stützt sich die Gewindehülse mit ihrem zylindrischen Gewindebereich in dem inneren zylinderförmigen Aufnahmeraum ab. Im Vergleich zu den oben beschriebenen Alternativen eines Bauteilverbunds liefert die Gewindehülse mit Spreizfuß ebenfalls ein lehrenhaltiges Gewinde, vorzugsweise ein Normgewinde, innerhalb des additiv hergestellten Bauteils. Damit bildet auch dieser Bauteilverbund in gleicher Weise wie die oben genannten Bauteilverbunde ein Hybridbauteil bestehend aus einem additiv hergestellten Bauteil aus Kunststoff oder Metall und einem Gewindeelement mit einem lehrenhaltigen Gewinde.

Vorliegende Erfindung umfasst des Weiteren ein additives Herstellungsverfahren eines Bauteils gemäß einer der oben beschriebenen Ausgestaltungen. Das erfindungsgemäße Herstellungsverfahren weist die folgenden Schritte auf: Bereitstellen einer dreidimensionalen Bauteilzeichnung des Bauteils, Umwandeln der dreidimensionalen Bauteilzeichnung in ein Schichtmodell für die additive Herstellung des Bauteils aus Kunststoff oder Metall und additives Herstellen des dreidimensionalen Bauteils.

Zudem stellt vorliegende Erfindung ein Herstellungsverfahren eines additiv gefertigten Bauteils mit einem Normgewinde bereit. Das erfindungsgemäße Herstellungsverfahren weist die folgenden Schritte auf: Bereitstellen eines additiv gefertigten Bauteils gemäß einer der oben beschrieben Ausgestaltungen und zumindest eines der folgenden Verbindungselement: eine Blindnietmutter oder eine Gewindehülse mit einem inneren Normgewinde oder ein Blindnietbolzen mit einem äußeren Normgewinde, Einstecken eines der Verbindungselemente durch die Bauteilöffnung in den Aufnahmeraum mit dem aufgeweiteten Einformabschnitt, Stauchen des Verbindungselements in axialer Richtung, sodass eine Stauchwulst des Verbindungselements gebildet und in den aufgeweiteten Einformabschnitt eingeformt wird.

Gemäß einer bevorzugten Ausgestaltung des Herstellungsverfahrens weist die Blindnietmutter oder der Blindnietbolzen einen umfänglichen Kragen auf, sodass die Blindnietmutter oder der Blindnietbolzen soweit durch die Bauteilöffnung gesteckt wird, bis der umfängliche Kragen an einer Bauteiloberfläche des Bauteils anliegt.

Vorliegende Erfindung umfasst zudem das erfindungsgemäß bevorzugte Herstellungsverfahren in Kombination mit dem additiv hergestellten Bauteil, in welchem zwischen der Bauteiloberfläche und dem Einformabschnitt die Axialstufe angeordnet ist. In diesem Herstellungsverfahren wird vorzugsweise eine Gewindehülse mit einem Außengewinde in den Aufnahmeraum geschraubt sowie ein Stauchabschnitt der Gewindehülse axial gestaucht und in den aufgeweiteten Einformabschnitt eingeformt. Gemäß einer bevorzugten Ausführungsform des beschriebenen Herstellungsverfahrens wird ein umfänglicher Kragen der Gewindehülse, der endseitig angeordnet ist, in die Axialstufe eingepresst.

4. Kurze Beschreibung der begleitenden Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:

Figur 1     eine bevorzugte Ausführungsform einer Blindnietmutter in einer teilweisen Schnittansicht,

Figur 2      eine bevorzugte Ausführungsform eines additiv hergestellten Bauteils mit einer darin befestigten Blindnietmutter,

Figur 3      eine perspektivische Ansicht einer bevorzugten Ausführungsform eines Blindnietbolzens,

Figur 4      eine bevorzugte Ausführungsform eines additiv hergestellten Bauteils mit einem darin befestigten Blindnietbolzen,

Figur 5      eine teilweise Schnittansicht einer bevorzugten Ausführungsform einer Gewindehülse mit Stauchabschnitt,

Figur 6      eine bevorzugte Ausführungsform eines Bauteilverbunds bestehend aus einem additiv hergestellten Bauteil mit einer darin befestigten Gewindehülse mit Stauchbereich

Figur 7      eine perspektivische teilweise Schnittansicht einer bevorzugten Ausführungsform eines additiv hergestellten Bauteils,

Figur 8      eine teilweise Schnittansicht einer Ausschnittsvergrößerung aus einem bevorzugten additiv hergestellten Bauteil,

Figur 9      eine weitere Ausschnittsvergrößerung einer bevorzugten Ausgestaltung des additiv hergestellten Bauteils,

Figur 10     eine perspektivische Schnittansicht einer weiteren bevorzugten Ausgestaltung des additiv hergestellten Bauteils,

Figur 11     eine Übersicht bevorzugter Ausgestaltungen einer Umfangskontur des Einformabschnitts und/oder des Stützabschnitts jeweils in einer schematischen radialen Schnittansicht,

Figur 12     eine bevorzugte Ausführungsform eines Bauteilverbunds bestehend aus einem additiv hergestellten Bauteil und einer Gewindehülse mit Nietfuß in einer Schnittansicht,

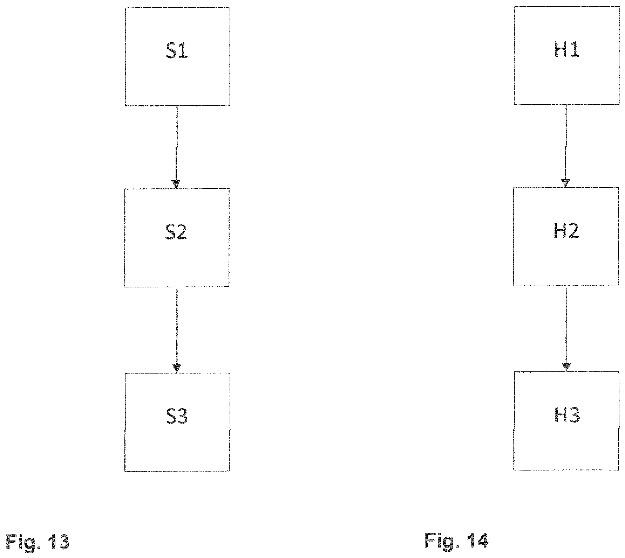

Figur 13     ein Flussdiagramm einer bevorzugten Ausführungsform eines additiven Herstellungsverfahrens eines Bauteils,

Figur 14     ein Flussdiagramm einer bevorzugten Ausführungsform eines Herstellungsverfahrens eines additiv gefertigten Bauteils mit einem lehrenhaltigen Gewinde, insbesondere einem Normgewinde.

## 5. Detaillierte Beschreibung der bevorzugten Ausführungsformen

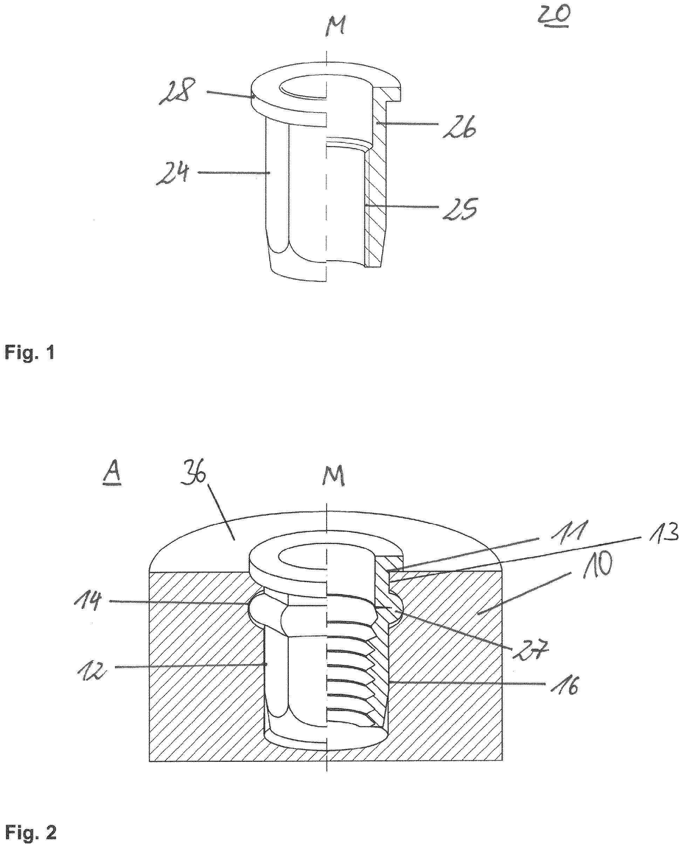

Vorliegende Erfindung stellt ein mit einem additiven Herstellungsverfahren produziertes Bauteil bereit, welches mit einem belastbaren und lehrenhaltigen Gewinde, insbesondere einem Normgewinde, ausgestattet ist. Additive Herstellungsverfahren nutzen Metall- oder Kunststoffpulver oder -granulate, um schichtweise das Bauteil aufzubauen. Grundlage dafür ist ein computergeneriertes dreidimensionales Modell des Bauteils, welches vor der Herstellung in ein Schichtmodell umgewandelt wird. Derartige Verfahren für unterschiedliche Werkstoffe sind im Stand der Technik bekannt. Bevorzugte Ausführungsformen der additiv hergestellten Bauteile 10; 30; 50 sind schematisch in den Figuren 2, 4, 6, 7-10 und 12 gezeigt.

Um die additiv hergestellten Bauteile 10; 30; 50 mit einem lehrenhaltigen Innengewinde 25, insbesondere ein Normgewinde, auszustatten, ist ein Gewindeelement 20; 22; 40; 60 in dem jeweils additiv hergestellten Bauteil 10; 30; 50 befestigt, wie in den Figuren 2, 4, 6, 12 gezeigt ist.

Die Verbindung aus additivhergestelltem Bauteil 10; 30; 50 und dem Gewindeelement 20; 22; 40; 60 bildet einen Bauteilverbund A; B; C; D.

In dem ersten bevorzugten Bauteilverbund A ist eine im Stand der Technik bekannte Blindnietmutter 20 (siehe Figur 1) in dem additiv hergestellten Bauteil 10 aus Kunststoff oder Metall befestigt. Die Blindnietmutter 20 weist einen hohlzylinderähnlichen Schaft 24 mit einem Innengewindebereich 25 und einem Stauchbereich 26 auf. Der Stauchbereich 26 ist angrenzend an einen umfänglichen Kragen 28 angeordnet, der radial auswärts bezogen auf den Stauchbereich 26 vorsteht.

Der hohlzylindrische Schaft 24 ist in seiner radialen Außenkontur rund oder eckig oder allgemein unrund ausgebildet. Eine unrunde Kontur hat den bevorzugten Vorteil, dass eine Rotationshemmung der Blindnietmutter 20 im Bauteil 10 unterstützt wird.

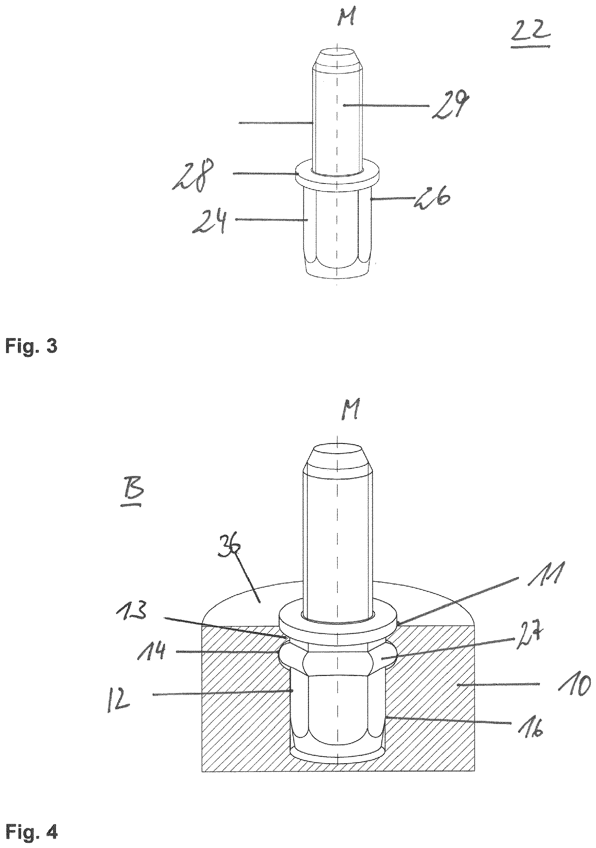

Ähnlich wie die Blindnietmutter 20 ist ein bekannter Blindnietbolzen 22 aufgebaut (siehe Figur 3). Dieser weist ebenfalls den hohlzylinderähnlichen Schaft 24 mit dem Stauchbereich 26 und dem umfänglich umlaufenden Kragen 28 auf. In dem Gewindebereich 25 ist ein Gewindebolzen 29 befestigt, der über den umlaufenden Kragen 28 axial hinausragt und ein Außengewinde aufweist.

Zur Aufnahme und Befestigung der Blindnietmutter 20 und des Blindnietbolzens 22 weist das Bauteil 10 einen inneren Aufnahmeraum 12 auf. Der Aufnahmeraum 12 ist zumindest einseitig über eine Bauteilöffnung 11 zugänglich. Durch die Bauteilöffnung 11 wird die Blindnietmutter 20 oder der Blindnietbolzen 22 in den Aufnahmeraum 12 eingesteckt. Es ist ebenfalls bevorzugt, den Aufnahmeraum 12 in axialer Richtung beidseitig offen vorzusehen.

Der Aufnahmeraum 12 unterteilt sich in einen der Bauteilöffnung 11 zugewandten aufgeweiteten Einformabschnitt 14. Von der Bauteilöffnung 11 abgewandt ist ein zylinderförmiger Stützabschnitt 16 vorgesehen. In einem axialen Querschnitt ist der Aufnahmeraum 12 aufgrund seiner Zusammensetzung aus wulstartigem Einformabschnitt 14 und zylinderförmigem Stützabschnitt 16 pilzförmig ausgebildet, wie man anhand der Figuren 2, 4, 7-10 erkennen kann. Entsprechend ist der Einformabschnitt 14 in einem Innendurchmesser größer ausgebildet als der Stützabschnitt 16.

Durch die bevorzugten Durchmesserunterschiede zwischen dem Einformabschnitt 14 und dem Stützabschnitt 16 wird eine Hinterschnittbildung des Stauchbereichs 26 in axialer Richtung der Blindnietmutter 20 und des Blindnietbolzens 22 unterstützt. Dieser Hinterschnitt des Stauchabschnitts 26 hält vorzugsweise die Blindnietmutter 20 oder den Blindnietbolzen 22 innerhalb des Bauteils 10 fest.

Um den Bauteilverbund A; B herzustellen, wird zunächst das Bauteil 10; 20; 30; 50 mit dem additiven Herstellungsverfahren produziert. Grundlage für die Produktion ist die Bereitstellung des Bauteils 10; 20; 30; 50 in Form einer dreidimensionalen Bauteilzeichnung (Schritt S1).

Nachfolgend wird die dreidimensionale Bauteilzeichnung in ein Schichtmodell umgewandelt, um auf dieser Grundlage computergesteuert das Bauteil 10; 20; 30; 50 schichtweise additiv aus Kunststoff oder Metall herstellen zu können (Schritt S2).

Sobald das Schichtmodell des Bauteils 10; 20; 30; 50 computergestützt erzeugt worden ist, findet die additive Herstellung des Bauteils 10; 20; 30; 50 statt (Schritt S3).

Da im Rahmen der additiven Herstellung der Bauteile 10; 20; 30; 50 ein lehrenhaltiges Gewinde, vorzugsweise ein Normgewinde, nur mit großem Aufwand oder gar nicht erzeugt werden kann, wird das Bauteil 10; 20; 30; 50 nach seiner additiven Herstellung mit dem Gewindeelement 20; 22; 40; 60 vorzugsweise unlösbar verbunden. Die Gewindeelemente 20; 22; 40; 60 weisen ein lehrenhaltiges Gewinde 25, vorzugsweise ein Normgewinde, auf.

Damit sich eine Schraube präzise in das Gewinde 25 drehen lässt, müssen sowohl die Gewindemaße der Schraube als auch die des Gewindes 25 genügend Spiel für den Verschraubungsprozess bieten. Dieses Spiel wird durch die Lehrenhaltigkeit sichergestellt. Das gleiche gilt analog für den Blindnietbolzen 22 mit Außengewinde.

Nachdem das additiv hergestellte Bauteil 10; 30; 50 und das Gewindeelement 20; 22; 40; 60 im Schritt H1 bereitgestellt worden sind, wird das Gewindeelement 20; 22; 40; 60 durch die Bauteilöffnung 11 in den Aufnahmeraum 12 eingesetzt (Schritt H2).

Vorzugsweise werden die Blindnietmutter 20 und der Blindnietbolzen 22 in die Aufnahmeöffnung 12 eingesteckt. Gemäß einer weiteren erfindungsgemäßen Ausgestaltung ist das Gewindeelement eine Gewindehülse 40 mit einem Innengewinde 25 und einem Außengewinde 42. Die Gewindehülse 40 wird im Herstellungsschritt H2 über das Außengewinde 42 in den Aufnahmeraum 12 eingeschraubt.

Dadurch wird bevorzugt der Stauchabschnitt 26; 26' benachbart zum aufgeweiteten Einformabschnitt 14 angeordnet.

Nachfolgend wird das Gewindeelement 20; 22; 40 parallel zu seiner Mittellängsachse M innerhalb des Aufnahmeraums 12 in bekannter Weise gestaucht (Schritt H3). Während des Stauchvorgangs wird die Schaftwand des Stauchabschnitts 26; 26' radial auswärts gefaltet. Dadurch entsteht eine Stauchwulst 27; 27', die in den aufgeweiteten Einformabschnitt 14 gedrängt wird.

Vorzugsweise ist zwischen dem aufgeweiteten Einformabschnitt 14 und der Bauteilöffnung 11 ein radial einwärts ragender umlaufender Kragen 13 angeordnet. Der Kragen 13 verringert einen Durchmesser der Bauteilöffnung 11 im Vergleich zu einem Innendurchmesser des Einformabschnitts 14. Basierend auf dieser bevorzugten Konstruktion bildet vorzugsweise die Stauchwulst 27 im Einformabschnitt 12 einen axialen Hinterschnitt in Richtung der Bauteilöffnung 11 sowie in Richtung des zylinderförmigen Stützabschnitts 16. Dadurch werden vorzugsweise die Blindnietmutter 20, der Blindnietbolzen 22 und die Gewindehülse 40 axial im Aufnahmeraum 12 gehalten und fixiert.

Zum Stauchen der Blindnietmutter 20, des Blindnietbolzens 22 und der Gewindehülse 40 wird gemäß einer bevorzugten Ausgestaltung des Herstellungsverfahrens des Bauteilverbunds ein Gewindebolzen (nicht gezeigt) in das Innengewinde 25 der Blindnietmutter 20, des Blindnietbolzens 22 und der Gewindehülse 40 geschraubt. Gegen eine axiale Haltekraft am Kragen 28 der Blindnietmutter 20 oder des Blindnietbolzens 22 oder am Kragen 28' der Gewindehülse 40 wird der Schaft 24 mit eingeschraubtem Gewindebolzen in Richtung Kragen 28,28' gezogen. Durch die wirkende axiale Zugkraft faltet sich der Stauchbereich 26; 26' radial auswärts in die Stauchwulst 27 und in den aufgeweiteten Einformabschnitt 14.

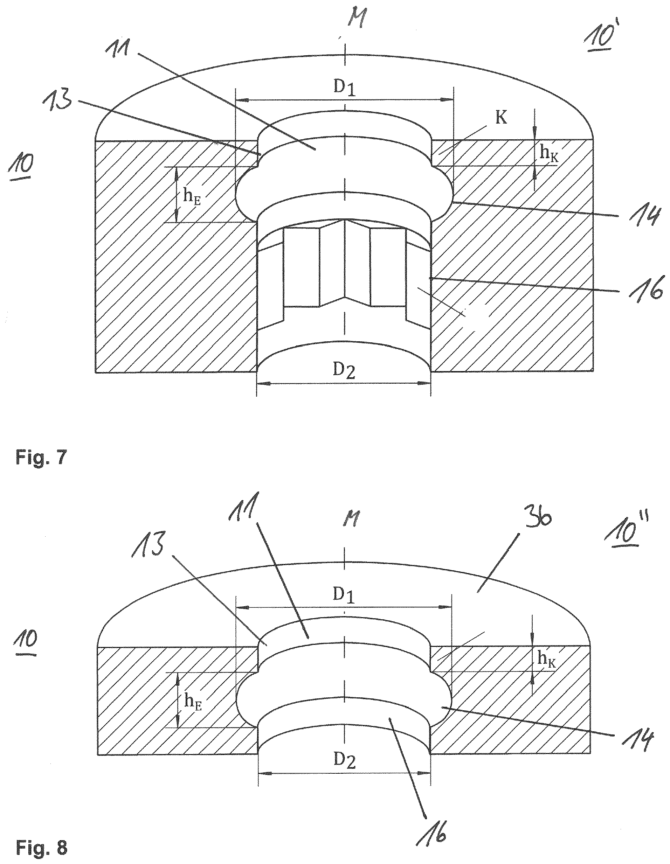

Bezugnehmend auf Figur 7 hat der umfängliche Haltekragen 13 an der Bauteilöffnung 11 eine bevorzugte axiale Ausdehnung $h_K$ parallel zur Mittellängsachse M. Die bevorzugte axiale Ausdehnung $h_K$ des Kragens 13 stellt eine konstruktive Grundlage für einen Presssitz der Blindnietmutter 20 und des Blindnietbolzens 22 am Kragen 13 sicher. Denn vorzugsweise stützen sich der Kragen 28 und die Stauchwulst 27 an gegenüberliegenden Seiten des Haltekragens 30, vorzugsweise gegeneinander, ab. Dies realisiert eine Unterstützung des Halts der Blindnietmutter 20 und des Blindnietbolzens 22 im Aufnahmeraum 12.

Vorzugsweise hat der Haltekragen 13 eine axiale Stärke $h_K$ im Bereich von 0,5 mm$\leq h_K \leq$5 mm.

Zur Aufnahme der Stauchwulst 27 weist der Einformabschnitt 14 eine bevorzugte axiale Höhe $h_E$ im Bereich von 0,5 mm≤$h_E$≤10 mm, vorzugsweise 0,5 mm≤$h_E$≤5 mm auf. Um eine bevorzugte axiale Klemmung der Stauchwulst 27 in dem Einformabschnitt 14 zu erzielen, wird die Höhe $h_E$ des Einformabschnitts 14 vorzugsweise an eine axiale Stärke der zu erwartenden Stauchwulst 27 angepasst. Dies hat den stabilisierenden Effekt, dass zusätzlich bevorzugt die axialen Seiten der Stauchwulst 27 an der Innenseite des Einformabschnitts 14 abgestützt werden, nachdem die Stauchwulst 27 in den Einformabschnitt 14 während des Stauchvorgangs gezwängt worden ist.

Gemäß einer weiteren bevorzugten Ausführungsform vorliegender Erfindung weist der Einformabschnitt 14 einen maximalen inneren Durchmesser $D_1$ auf. Der zylinderförmige Stützabschnitt 16 hat vorzugsweise einen maximalen Innendurchmesser $D_2$. Der Innendurchmesser $D_1$ des Einformabschnitts ist größer ausgebildet als der Innendurchmesser $D_2$ des zylinderförmigen Stützabschnitts 16. Dies gilt vorzugsweise für die additiv hergestellten Bauteile 10 zur Aufnahme der Blindnietmutter 20 und des Blindnietbolzens 22 sowie für das Bauteil 30 zur Aufnahme der Gewindehülse 40 mit Stauchbereich 26' (siehe Figuren 7, 8, 9, 10). Diese bevorzugte Abstimmung der Innendurchmesser $D_1$, $D_2$ unterstützt die Hinterschnittbildung der Stauchwulst 27 innerhalb des Aufnahmeraums 12 und damit den Halt des Gewindeelements 20; 22; 40 im additiv hergestellten Bauteil 10; 30.

Weiter bevorzugt erfüllen die Innendurchmesser $D_1$, $D_2$ des Einformabschnitts 14 und des Stützabschnitts 16 folgendes Verhältnis:

$$0,6 \leq D_2/D_1 \leq 0,95.$$

Gemäß einer weiteren bevorzugten Ausführungsform vorliegender Erfindung weisen der Einformabschnitt 14 und/oder der zylinderförmige Stützabschnitt 16 eine unrunde Innenkontur 15/17 auf. Vorzugsweise umfasst die unrunde Innenkontur 15,17 jede Form, die mit einer ebenfalls unrunden Außenkontur der Stauchwulst 27 und/oder einer unrunden Außenkontur des Schafts 24 einen drehungshemmenden Formschluss eingehen kann. Dazu ist es bevorzugt ausreichend, wenn zumindest eine Teilfläche der Stauchwulst 27 an der Innenseite des Einformabschnitts 14 oder ein Teilbereich der Außenseite des Schafts 24 an der Innenseite des Stützabschnitts 16 formschlüssig anliegt.

In einem radialen Querschnitt durch den Einformabschnitt 14 und den Stützabschnitt 16 und den Schaft 24 betrachtet sind folgende drehungshemmende Konturen für den Schaft 24, den Einformabschnitt 14 und den Stützabschnitt 16 bevorzugt: alle n-eckigen Formen mit n ≥ 3, sternartige Formen, gerundete Formen der oben genannten, Kreuzformen, Rechteckformen, Tropfenformen, Linsenformen, Ellipsenform.

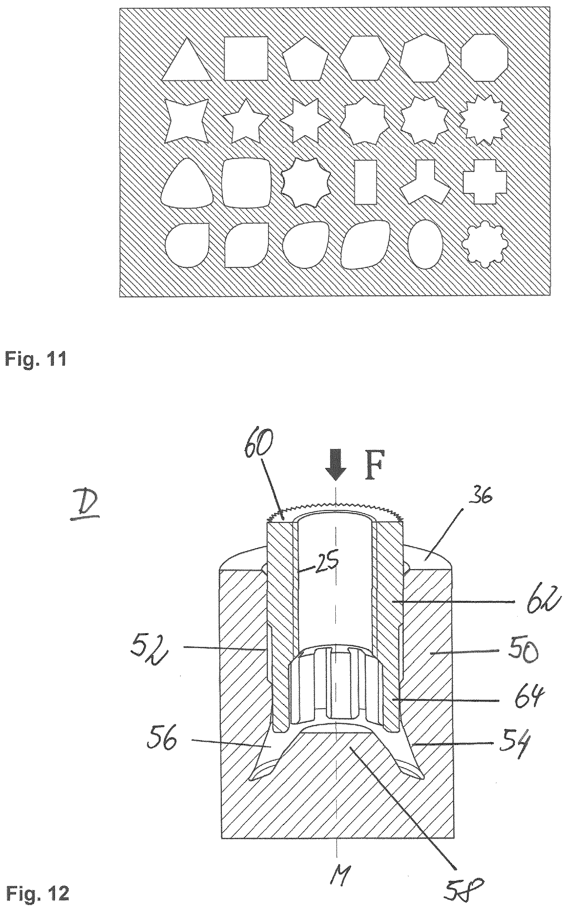

Die oben genannten Formen bzw. Konturen sind beispielgebend in Figur 11 schematisch in einer Draufsicht dargestellt.

Zudem lässt sich die bevorzugte unrunde Form des Einformabschnitts 14 und des Stützabschnitts 16 durch eine Durchmesservariation der Innendurchmesser $D_1$ und $D_2$ beschreiben. Denn mit einer gedachten Drehung des Durchmessers $D_1$ und $D_2$ um die Mittellängsachse M verändert dieser seine Länge aufgrund der drehungshemmenden Kontur des Einformabschnitts 14 und des Stützabschnitts 16 (siehe auch Figuren 7-9).

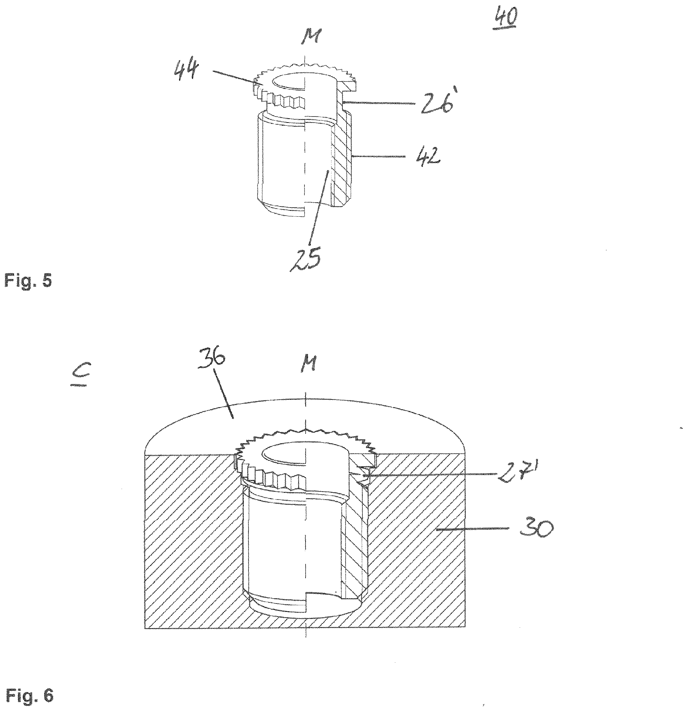

Gemäß einer weiteren bevorzugten Ausgestaltung des Bauteilverbunds C ist die Gewindehülse 40 gemäß Figur 5 im Bauteil 30 befestigt. Die Gewindehülse 40 weist neben dem Innengewinde 25, dem Außengewinde 23 und dem Stauchbereich 26 einen umlaufenden und endseitig angeordneten Befestigungskragen 44 auf. Das Außengewinde 42 greift vorzugsweise in ein Innengewinde 32 des Stützabschnitts 16 ein.

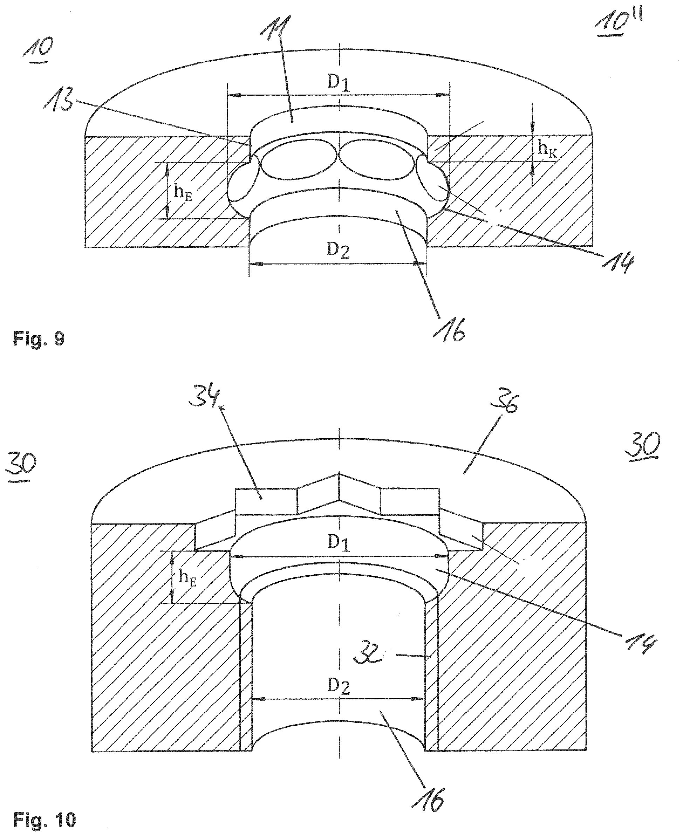

Um den Befestigungskragen 44 gegen Drehung im Bauteil 30 befestigen zu können, weist dieser eine unrunde Außenkontur auf. Diese Außenkontur ist ähnlich aufgebaut, wie es in Bezug auf die Innenkontur des Einformabschnitts 14 und des Stützabschnitts 16 (siehe Figuren 7, 9) beschrieben worden ist.

Um die Gewindehülse 40 im Bauteilverbund C bündig mit der Bauteiloberfläche anzuordnen (siehe Figur 6), ist eine axiale Stufe 34 angrenzend an den Einformabschnitt 14 vorgesehen. Die Axialstufe 14 stellt eine stufenförmige Verbindung zwischen der äußeren Bauteiloberfläche 36 und dem Einformabschnitt 14 dar. Im Vergleich zum Bauteil 10 vergrößert die Axialstufe 34 die Bauteilöffnung 11, indem der Kragen 13 radial in das Bauteil zurückspringt.

Um die Gewindehülse 40 über den Befestigungskragen 44 gegen Drehung zu halten, weist die axiale Stufe 34 vorzugsweise in Umfangsrichtung eine unrunde Kontur auf. Diese ist ebenfalls bevorzugt polygonartig, wellenförmig, krummlinig oder anderweitig geformt, wie es oben in Bezug auf die unrunde Innenkontur des Einformabschnitts 14 und des Stützabschnitts 16 beschrieben worden ist.

Während der Befestigung der Gewindehülse 40 im Bauteil 30 wird der Stauchbereich 26' in den Einformabschnitt 14 gefaltet. Zudem wird bevorzugt der Befestigungskragen 44 in die axiale Stufe 34 gezwängt bzw. gepresst.

Eine weitere bevorzugte Ausführungsform eines Bauteilverbunds D zeigt Figur 12. Der Bauteilverbund D besteht aus einem additiv hergestellten Bauteil 50 mit einem zylindrischen Aufnahmeraum 52 beginnend an einer Bauteilöffnung 51.

An dem geschlossenen Ende des Aufnahmeraums 52 geht der zylindrische Abschnitt 52 in einen kegelstumpfartigen Einformabschnitt 54 über. Der kegelstumpfartige Einformabschnitt 54 besteht aus einem Aufnahmespalt 56, der um einen kegelstumpfartigen Dorn 58 umläuft. Der kegelstumpfartige Dorn 58 ragt in Richtung Bauteilöffnung 51 und verjüngt sich in Richtung Bauteilöffnung 51.

Der zylindrische Abschnitt 52 in Kombination mit dem kegelstumpfartigen Einformabschnitt 56 ist an ein Gewindeelement 60 angepasst, welches aus einer hohlzylindrischen Gewindehülse 62 mit einem Nietfuß 64 besteht.

Durch eine Setzkraft F wird das Gewindeelement 60 in den zylindrischen Abschnitt 52 gepresst (siehe Figur 12). Dabei trifft der Nietfuß 64 auf den kegelstumpfartigen Dorn 58 und wird radial ausgeweitet. Gleichzeitig wird der Nietfuß 64 in den Aufnahmespalt 56 gepresst.

Eine bevorzugte unrunde Außenkontur der Gewindehülse 62 erzielt die bevorzugte Rotationshemmung des Gewindeelements 60 im Bauteil 50

Bezugszeichenliste

| | |
|---|---|
| A, B, C, D | Bauteilverbund |
| 10 | additiv hergestelltes Bauteil |
| 11 | Bauteilöffnung |
| 12 | Aufnahmeraum |
| 13 | Haltekragen |
| 14 | wulstartiger Einformabschnitt |
| 15 | unrunde Innenkontur des Einformabschnitts |
| 16 | zylinderförmiger Stützabschnitt |
| 17 | unrunde Innenkontur des Stützabschnitts |
| 20, 22, 40, 60 | Gewindeelement |
| 20 | Blindnietmutter |
| 22 | Blindnietbolzen |
| 24 | hohlzylindrischer Schaft |
| 25 | Gewindebereich |
| 26 | Stauchbereich |
| 28 | umfänglicher Kragen |
| 29 | Gewindebolzen |
| 30 | additiv hergestelltes Bauteil |
| 32 | Innengewinde |
| 34 | axiale Stufe |
| 36 | Bauteiloberfläche |
| 40 | Gewindehülse mit Stauchbereich |
| 42 | Außengewinde |
| 44 | Befestigungskragen |
| 50 | additiv hergestelltes Bauteil |
| 52 | Aufnahmeraum |
| 60 | Gewindehülse mit Nietfuß |

**Patentansprüche**

1. Ein additiv hergestelltes Bauteil (10; 30; 50) aus Metall oder Kunststoff, welches einen zumindest einseitig an einer Bauteilöffnung (11) offenen inneren Aufnahmeraum (12) aufweist, der von einer Bauteilseite zugänglich und in einem axialen Querschnitt pilzförmig ausgebildet ist, wobei der Aufnahmeraum (12) zumindest einen der Bauteilöffnung (11) zugewandten aufgeweiteten Einformabschnitt (14) und zumindest einen der Bauteilöffnung (11) abgewandten zylinderförmigen Stützabschnitt (16) aufweist.

2. Das additiv hergestellte Bauteil (10; 30; 50) gemäß Patentanspruch 1, in dem ein Durchmesser (Di) des Einformabschnitts (14) größer ist als ein Durchmesser ($D_2$) des Stützabschnitts (16).

3. Das additiv hergestellte Bauteil (10; 30; 50) gemäß einem der vorhergehenden Patentansprüche, in dem der Stützabschnitt (16) eine umlaufende Innenwand aufweist, die umfänglich durch eine Durchmesservariation des Stützabschnitts (16), vorzugsweise rotationshemmend, strukturiert ist.

4. Das additiv hergestellte Bauteil (10; 30; 50) gemäß einem der vorhergehenden Patentansprüche, in dem der Einformabschnitt (14) eine umlaufende Innenwand aufweist, die umfänglich durch eine Durchmesservariation des Einformabschnitts (14) strukturiert ist.

5. Das additiv hergestellte Bauteil (10; 30; 50) gemäß einem der vorhergehenden Patentansprüche, in dem sich ein Durchmesser $D_1$ des Einformabschnitts (14) zu einem Durchmesser $D_2$ des Stützabschnitts (16) verhält gemäß

$$0{,}6 \leq D_2/D_1 \leq 0{,}95.$$

6. Das additiv hergestellte Bauteil (10; 30; 50) gemäß einem der vorhergehenden Patentansprüche, in dem der Einformabschnitt (14) eine axiale Ausdehnung $h_E$ in einem Bereich $0{,}5\ mm \leq h_E \leq 10\ mm$, insbesondere $0{,}5\ mm \leq h_E \leq 5\ mm$, aufweist.

7. Das additiv hergestellte Bauteil (10; 30; 50) gemäß einem der vorhergehenden Patentansprüche, in dem zwischen der Bauteilöffnung (11) und dem Einformabschnitt (14) ein radial einwärts ragender umlaufender Haltekragen (13) angeordnet ist, der als axialer Klemmbereich mit einer axialen Stärke $h_K$ in einem Bereich von $0{,}5\ mm \leq h_K \leq 5\ mm$ dient.

8. Das additiv hergestellte Bauteil (10; 30; 50) gemäß einem der vorhergehenden Patentansprüche 1-6, in dem zwischen der Bauteiloberfläche und dem Einformabschnitt (14) eine Axialstufe (34) angeordnet ist, die bevorzugt eine unrunde Radialkontur aufweist.

9. Das additiv hergestellte Bauteil (10; 30; 50) gemäß Patentanspruch 8, in dem der zylinderförmige Stützabschnitt (16) ein Innengewinde (32) aufweist.

**10.** Ein Bauteilverbund (A; B) bestehend aus einem additiv hergestellten Bauteil (10) gemäß einem der vorhergehenden Patentansprüche 1-8 und einer Blindnietmutter (20) oder einem Blindnietbolzen (22), die jeweils in dem Aufnahmeraum (116) befestigt sind, wobei sich eine Stauchwulst (27) der Blindnietmutter (20) oder des Blindnietbolzens (22) in den aufgeweiteten Einformabschnitt (14) erstreckt.

**11.** Ein Bauteilverbund (C) bestehend aus einem additiv hergestellten Bauteil (30) gemäß Patentanspruch 9 und einer Gewindehülse (40) mit einem radial äußeren Befestigungsgewinde (42) und einem radial inneren lehrenhaltigen Gewinde (25), vorzugsweise ein Normgewinde, die in dem Aufnahmeraum (12) befestigt ist, wobei sich eine Stauchwulst (27') der Gewindehülse (40) in den aufgeweiteten Einformabschnitt (14) erstreckt.

**12.** Der Bauteilverbund (C) gemäß Patentanspruch 11, wobei ein Endkragen (44) der Gewindehülse (40) in der Axialstufe (34) des Bauteils (30) angeordnet ist und eine formschlüssige Verbindung mit dem Bauteil (30) ausbildet.

**13.** Ein Bauteilverbund (D) bestehend aus einem additiv hergestellten Bauteil (50) aus Metall oder Kunststoff, welches einen zumindest einseitig an einer Bauteilöffnung (11) offenen inneren Aufnahmeraum (52) aufweist, der von einer Bauteilseite (36) zugänglich und in einem axialen Querschnitt zylinderförmig ausgebildet ist, der Aufnahmeraum (52) weist an einer der Bauteilöffnung (11) abgewandten Seite einen Aufspreizkegel (58) auf, der sich in Richtung Bauteilöffnung (11) verjüngt und von einem umlaufenden Einformspalt (56) umgeben ist, wobei in der zylinderförmigen Bauteilöffnung (11) eine Gewindehülse (60) mit einseitigen Nietfuß (64) verankert ist, indem der Nietfuß (64) in den umlaufenden Einformspalt (56) radial aufgespreizt ist.

**14.** Der Bauteilverbund (D) gemäß Patentanspruch 13, in dem die Gewindehülse (60) ein inneres lehrenhaltiges Gewinde (25), insbesondere ein Normgewinde, aufweist und der Nietfuß (64) als Spreizfuß ausgebildet ist.

**15.** Ein additives Herstellungsverfahren eines Bauteils (10; 30; 50) gemäß einem der Patentansprüche 1-9, welches die folgenden Schritte aufweist:

Bereitstellen einer dreidimensionalen Bauteilzeichnung des Bauteils (S1),
Umwandeln der dreidimensionalen Bauteilzeichnung in ein Schichtmodell für die additive Herstellung des Bauteils aus Kunststoff oder Metall (S2) und
additives Herstellen des dreidimensionalen Bauteils (S3).

**16.** Ein Herstellungsverfahren eines additiv gefertigten Bauteils mit einem Normgewinde, welches die folgenden Schritte aufweist:

a. Bereitstellen eines additiv gefertigten Bauteils (10; 30; 50) gemäß einem der Patentansprüche 1-9 und zumindest eines der folgenden Gewindeelemente: eine Blindnietmutter (20) oder eine Gewindehülse (40) mit einem inneren lehrenhaltigen Gewinde (25) oder ein Blindnietbolzen (22) mit einem äußeren Normgewinde (H1),
b. Einsetzen, vorzugsweise Einstecken, eines der Gewindeelemente (20; 22; 40) durch die Bauteilöffnung (11) in den Aufnahmeraum (12) mit dem aufgeweiteten Einformabschnitt (14) (H2),
c. Stauchen des Gewindeelements (20; 22; 40) in axialer Richtung, sodass eine Stauchwulst (27) des Verbindungselements (20; 22; 40) gebildet und in den aufgeweiteten Einformabschnitt (14) eingeformt wird (H3).

**17.** Das Herstellungsverfahren gemäß Patentanspruch 16, in dem die Blindnietmutter (20) oder der Blindnietbolzen (22) einen umfänglichen Kragen (28) aufweist, sodass die Blindnietmutter (20) oder der Blindnietbolzen (22) so weit durch die Bauteilöffnung (11) gesteckt wird, bis der umfängliche Kragen (28) an einer Bauteiloberfläche (36) des Bauteils (10; 30; 50) anliegt.

**18.** Das Herstellungsverfahren gemäß Patentanspruch 16 in Kombination mit Patentanspruch 8, in dem eine Gewindehülse (40) mit einem Außengewinde (42) in den Aufnahmeraum (12) geschraubt wird und ein Stauchabschnitt (26) der Gewindehülse (40) axial gestaucht und in den aufgeweiteten Einformabschnitt (14) eingeformt wird.

**19.** Das Herstellungsverfahren gemäß Patentanspruch 18, in dem ein umfänglicher Kragen (44) der Gewindehülse (40), der endseitig angeordnet ist, in die Axialstufe (34) eingepresst wird.

**Geänderte Patentansprüche gemäss Regel 137(2) EPÜ.**

**1.** Ein additiv hergestelltes Bauteil (10; 30; 50) aus Metall oder Kunststoff, welches einen zumindest einseitig an einer Bauteilöffnung (11) offenen inneren Aufnahmeraum (12) aufweist, der von einer Bauteilseite zugänglich und in einem axialen Querschnitt pilzförmig ausgebildet ist, wobei der Aufnahmeraum (12) zumindest einen der Bauteilöffnung (11) zugewandten aufgeweiteten Einformabschnitt (14) und zumindest einen der Bauteilöffnung (11) abgewandten zylinderförmigen Stützabschnitt (16) aufweist, wobei der Stützabschnitt (16) eine umlaufende Innenwand aufweist, die umfänglich durch eine Durchmesservariation des Stützabschnitts (16), vorzugsweise rotationshemmend, strukturiert ist, und/oder der Einformabschnitt (14) eine umlaufende Innenwand aufweist, die umfänglich durch eine Durchmesservariation des Einformabschnitts (14) strukturiert ist.

2. Das additiv hergestellte Bauteil (10; 30; 50) gemäß Patentanspruch 1, in dem ein Durchmesser ($D_1$) des Einformabschnitts (14) größer ist als ein Durchmesser ($D_2$) des Stützabschnitts (16).

3. Das additiv hergestellte Bauteil (10; 30; 50) gemäß einem der vorhergehenden Patentansprüche, in dem sich ein Durchmesser Di des Einformabschnitts (14) zu einem Durchmesser $D_2$ des Stützabschnitts (16) verhält gemäß

$$0{,}6 \leq D_2/D_1 \leq 0{,}95.$$

4. Das additiv hergestellte Bauteil (10; 30; 50) gemäß einem der vorhergehenden Patentansprüche, in dem der Einformabschnitt (14) eine axiale Ausdehnung $h_E$ in einem Bereich 0,5 mm $\leq h_E \leq$ 10 mm, insbesondere 0,5 mm $\leq h_E \leq$ 5 mm, aufweist.

5. Das additiv hergestellte Bauteil (10; 30; 50) gemäß einem der vorhergehenden Patentansprüche, in dem zwischen der Bauteilöffnung (11) und dem Einformabschnitt (14) ein radial einwärts ragender umlaufender Haltekragen (13) angeordnet ist, der als axialer Klemmbereich mit einer axialen Stärke $h_K$ in einem Bereich von 0,5 mm $\leq h_K \leq$ 5 mm dient.

6. Das additiv hergestellte Bauteil (10; 30; 50) gemäß einem der vorhergehenden Patentansprüche 1-6, in dem zwischen der Bauteiloberfläche und dem Einformabschnitt (14) eine Axialstufe (34) angeordnet ist, die bevorzugt eine unrunde Radialkontur aufweist.

7. Das additiv hergestellte Bauteil (10; 30; 50) gemäß Patentanspruch 6, in dem der zylinderförmige Stützabschnitt (16) ein Innengewinde (32) aufweist.

8. Ein Bauteilverbund (A; B) bestehend aus einem additiv hergestellten Bauteil (10) gemäß einem der vorhergehenden Patentansprüche 1-6 und einer Blindnietmutter (20) oder einem Blindnietbolzen (22), die jeweils in dem Aufnahmeraum (116) befestigt sind, wobei sich eine Stauchwulst (27) der Blindnietmutter (20) oder des Blindnietbolzens (22) in den aufgeweiteten Einformabschnitt (14) erstreckt.

9. Ein Bauteilverbund (C) bestehend aus einem additiv hergestellten Bauteil (30) gemäß Patentanspruch 7 und einer Gewindehülse (40) mit einem radial äußeren Befestigungsgewinde (42) und einem radial inneren lehrenhaltigen Gewinde (25), vorzugsweise ein Normgewinde, die in dem Aufnahmeraum (12) befestigt ist, wobei sich eine Stauchwulst (27') der Gewindehülse (40) in den aufgeweiteten Einformabschnitt (14) erstreckt.

10. Der Bauteilverbund (C) gemäß Patentanspruch 9, wobei ein Endkragen (44) der Gewindehülse (40) in der Axialstufe (34) des Bauteils (30) angeordnet ist und eine formschlüssige Verbindung mit dem Bauteil (30) ausbildet.

11. Ein Bauteilverbund (D) bestehend aus einem additiv hergestellten Bauteil (50) aus Metall oder Kunststoff, welches einen zumindest einseitig an einer Bauteilöffnung (11) offenen inneren Aufnahmeraum (52) aufweist, der von einer Bauteilseite (36) zugänglich und in einem axialen Querschnitt zylinderförmig ausgebildet ist, der Aufnahmeraum (52) weist an einer der Bauteilöffnung (11) abgewandten Seite einen Aufspreizkegel (58) auf, der sich in Richtung Bauteilöffnung (11) verjüngt und von einem umlaufenden Einformspalt (56) umgeben ist, wobei in der zylinderförmigen Bauteilöffnung (11) eine Gewindehülse (60) mit einseitigen Nietfuß (64) verankert ist, indem der Nietfuß (64) in den umlaufenden Einformspalt (56) radial aufgespreizt ist.

12. Der Bauteilverbund (D) gemäß Patentanspruch 11, in dem die Gewindehülse (60) ein inneres lehrenhaltiges Gewinde (25), insbesondere ein Normgewinde, aufweist und der Nietfuß (64) als Spreizfuß ausgebildet ist.

13. Ein additives Herstellungsverfahren eines Bauteils (10; 30; 50) gemäß einem der Patentansprüche 1-7, welches die folgenden Schritte aufweist:

Bereitstellen einer dreidimensionalen Bauteilzeichnung des Bauteils (S1),
Umwandeln der dreidimensionalen Bauteilzeichnung in ein Schichtmodell für die additive Herstellung des Bauteils aus Kunststoff oder Metall (S2) und
additives Herstellen des dreidimensionalen Bauteils (S3).

14. Ein Herstellungsverfahren eines additiv gefertigten Bauteils mit einem Normgewinde, welches die folgenden Schritte aufweist:

a. Bereitstellen eines additiv gefertigten Bauteils (10; 30; 50) gemäß einem der Patentansprüche 1-7 und zumindest eines der folgenden Gewindeelemente: eine Blindnietmutter (20) oder eine Gewindehülse (40) mit einem inneren lehrenhaltigen Gewinde (25) oder ein Blindnietbolzen (22) mit einem äußeren Normgewinde (H1),

b. Einsetzen, vorzugsweise Einstecken, eines der Gewindeelemente (20; 22; 40) durch die Bauteilöffnung (11) in den Aufnahmeraum (12) mit dem aufgeweiteten Einformabschnitt (14) (H2),

c. Stauchen des Gewindeelements (20; 22; 40) in axialer Richtung, sodass eine Stauchwulst (27) des Verbindungselements (20; 22; 40) gebildet und in den aufgeweiteten Einformabschnitt (14) eingeformt wird (H3).

**15.** Das Herstellungsverfahren gemäß Patentanspruch 14, in dem die Blindnietmutter (20) oder der Blindnietbolzen (22) einen umfänglichen Kragen (28) aufweist, sodass die Blindnietmutter (20) oder der Blindnietbolzen (22) so weit durch die Bauteilöffnung (11) gesteckt wird, bis der umfängliche Kragen (28) an einer Bauteiloberfläche (36) des Bauteils (10; 30; 50) anliegt.

**16.** Das Herstellungsverfahren gemäß Patentanspruch 14 in Kombination mit Patentanspruch 8, in dem eine Gewindehülse (40) mit einem Außengewinde (42) in den Aufnahmeraum (12) geschraubt wird und ein Stauchabschnitt (26) der Gewindehülse (40) axial gestaucht und in den aufgeweiteten Einformabschnitt (14) eingeformt wird.

**17.** Das Herstellungsverfahren gemäß Patentanspruch 16, in dem ein umfänglicher Kragen (44) der Gewindehülse (40), der endseitig angeordnet ist, in die Axialstufe (34) eingepresst wird.

**Fig. 1**

**Fig. 2**

Fig. 3

Fig. 4

40

44

M

26'

42

25

Fig. 5

C

36

M

27'

30

Fig. 6

$D_1$

$K$

$h_K$

$h_E$

$D_2$

**Fig. 7**

$D_1$

$h_K$

$h_E$

$D_2$

**Fig. 8**

$D_1$

$h_K$

$h_E$

$D_2$

**Fig. 9**

$D_1$

$h_E$

$D_2$

**Fig. 10**

**Fig. 11**

**Fig. 12**

```
        ┌─────────┐                          ┌─────────┐
        │         │                          │         │
        │   S1    │                          │   H1    │
        │         │                          │         │
        └────┬────┘                          └────┬────┘
             │                                     │
             ▼                                     ▼
        ┌─────────┐                          ┌─────────┐
        │         │                          │         │
        │   S2    │                          │   H2    │
        │         │                          │         │
        └────┬────┘                          └────┬────┘
             │                                     │
             ▼                                     ▼
        ┌─────────┐                          ┌─────────┐
        │         │                          │         │
        │   S3    │                          │   H3    │
        │         │                          │         │
        └─────────┘                          └─────────┘
```

Fig. 13                              Fig. 14

Europäisches
Patentamt

European
Patent Office

Office européen
des brevets

**EUROPÄISCHER RECHERCHENBERICHT**

Nummer der Anmeldung

EP 21 21 7088

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | DE 16 25 359 A1 (HILTI AG) 25. Juni 1970 (1970-06-25) * Seite 1; Abbildungen 2,7,10 * ----- | 13,14 | INV. F16B37/06 F16B37/12 |
| A | GB 2 461 866 A (ZOEFTIG & COMPANY LTD [GB]) 20. Januar 2010 (2010-01-20) * Abbildungen * ----- | 1-19 | |
| A | US 5 893 245 A (SEKIGUCHI TAKAMASA [JP] ET AL) 13. April 1999 (1999-04-13) * Abbildung 6 * ----- | 1-19 | |
| X | US 10 662 992 B2 (WOODWELDING AG [CH]) 26. Mai 2020 (2020-05-26) * Abbildungen * ----- | 13,14 | |
| X | EP 3 915 763 A1 (BOELLHOFF VERBINDUNGSTECHNIK GMBH [DE]) 1. Dezember 2021 (2021-12-01) | 1,2,5-7, 9,15 | |
| A | * Absätze [0001] – [0004]; Abbildungen * ----- | 3,4,8 | RECHERCHIERTE SACHGEBIETE (IPC) |
| X | EP 3 045 739 A1 (AIRBUS OPERATIONS GMBH [DE]) 20. Juli 2016 (2016-07-20) * Absätze [0019] – [0020], [0024]; Abbildungen * ----- | 1,15 | F16B B33Y B22F B29C B21J |
| X | US 2020/316873 A1 (MAYER JÖRG [CH] ET AL) 8. Oktober 2020 (2020-10-08) * Abbildungen * ----- | 13,14 | |
| X,D | EP 3 584 454 A2 (BOEING CO [US]) 25. Dezember 2019 (2019-12-25) * Absätze [0005] – [0006]; Abbildungen * ----- | 1,15 | |
| X | CN 112 490 719 A (ZHUZHOU CRRC TIMES ELECTRIC CO LTD) 12. März 2021 (2021-03-12) * Abbildungen * ----- | 1-12, 16-19 | |

Der vorliegende Recherchenbericht wurde für alle Patentansprüche erstellt

| Recherchenort | Abschlußdatum der Recherche | Prüfer |
|---|---|---|
| München | 2. Juni 2022 | Pöll, Andreas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 7088

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-06-2022

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE | 1625359 | A1 | 25-06-1970 | DE | 1625359 | A1 | 25-06-1970 |
| | | | | FR | 1574981 | A | 18-07-1969 |
| | | | | GB | 1182739 | A | 04-03-1970 |
| GB | 2461866 | A | 20-01-2010 | KEINE | | | |
| US | 5893245 | A | 13-04-1999 | AU | 717308 | B2 | 23-03-2000 |
| | | | | CN | 1167865 | A | 17-12-1997 |
| | | | | DE | 19708015 | A1 | 28-08-1997 |
| | | | | ID | 16205 | A | 11-09-1997 |
| | | | | JP | 3183199 | B2 | 03-07-2001 |
| | | | | JP | H09291649 | A | 11-11-1997 |
| | | | | SG | 79933 | A1 | 17-04-2001 |
| | | | | US | 5893245 | A | 13-04-1999 |
| US | 10662992 | B2 | 26-05-2020 | CN | 106233002 | A | 14-12-2016 |
| | | | | EP | 3102836 | A1 | 14-12-2016 |
| | | | | EP | 3964721 | A1 | 09-03-2022 |
| | | | | JP | 6560242 | B2 | 14-08-2019 |
| | | | | JP | 2017511443 | A | 20-04-2017 |
| | | | | KR | 20160135713 | A | 28-11-2016 |
| | | | | US | 2016341234 | A1 | 24-11-2016 |
| | | | | US | 2019338797 | A1 | 07-11-2019 |
| | | | | WO | 2015117253 | A1 | 13-08-2015 |
| EP | 3915763 | A1 | 01-12-2021 | KEINE | | | |
| EP | 3045739 | A1 | 20-07-2016 | KEINE | | | |
| US | 2020316873 | A1 | 08-10-2020 | AU | 2015341864 | A1 | 08-06-2017 |
| | | | | BR | 112017008716 | A2 | 19-12-2017 |
| | | | | CN | 107107476 | A | 29-08-2017 |
| | | | | EP | 3215346 | A1 | 13-09-2017 |
| | | | | JP | 6876605 | B2 | 26-05-2021 |
| | | | | JP | 2018501978 | A | 25-01-2018 |
| | | | | KR | 20170078821 | A | 07-07-2017 |
| | | | | RU | 2017117934 | A | 05-12-2018 |
| | | | | US | 2017334147 | A1 | 23-11-2017 |
| | | | | US | 2020316873 | A1 | 08-10-2020 |
| | | | | WO | 2016071335 | A1 | 12-05-2016 |
| EP | 3584454 | A2 | 25-12-2019 | CN | 110552949 | A | 10-12-2019 |
| | | | | EP | 3584454 | A2 | 25-12-2019 |
| | | | | US | 2019368533 | A1 | 05-12-2019 |
| CN | 112490719 | A | 12-03-2021 | KEINE | | | |

Für nähere Einzelheiten zu diesem Anhang : siehe Amtsblatt des Europäischen Patentamts, Nr.12/82

EPO FORM P0461

Seite 1 von 2

22

**ANHANG ZUM EUROPÄISCHEN RECHERCHENBERICHT
ÜBER DIE EUROPÄISCHE PATENTANMELDUNG NR.**

**EP 21 21 7088**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**02-06-2022**

| Im Recherchenbericht angeführtes Patentdokument | Datum der Veröffentlichung | Mitglied(er) der Patentfamilie | Datum der Veröffentlichung |
|---|---|---|---|
| ----------------------------------------------------------------- | | | |

Für nähere Einzelheiten zu diesem Anhang : siehe Amtsblatt des Europäischen Patentamts, Nr.12/82

EPO FORM P0461

**Seite 2 von 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3434916 A1
- CN 101530919 A
- EP 3584454 A2